Europäisches Patentamt

European Patent Office

Office européen des brevets

(11) Publication number : **0 475 684 A1**

# EUROPEAN PATENT APPLICATION

(21) Application number : **91308140.2**

(22) Date of filing : **05.09.91**

(51) Int. Cl.$^5$ : **A23K 3/03,** C12N 1/04

(30) Priority : **07.09.90 US 579747**

(43) Date of publication of application :
**18.03.92 Bulletin 92/12**

(84) Designated Contracting States :
**AT BE CH DE DK ES FR GB GR IT LI LU NL SE**

(71) Applicant : **ICI CANADA INC**
**90 Sheppard Avenue East**
**North York Ontario, M2N 6H2 (CA)**

(72) Inventor : **Gray, Ann Louise**
**2173 Galena Crescent**
**Oakville, Ontario L6H 4B1 (CA)**
Inventor : **Ohashi, Pamela Gloria**
**165 Blackfoot Trail**
**Missisauga, Ontario L5R 2G5 (CA)**

(74) Representative : **Locke, Timothy John et al**
**Imperial Chemical Industries PLC Legal**
**Department: Patents Bessemer Road PO Box**
**6**
**Welwyn Garden City Hertfordshire, AL7 1HD**
**(GB)**

(54) **Forage composition.**

(57)    A bacterial composition useful for the preparation or preservation of forage contains a silage or hay bacterial inoculant and a humectant. Particularly useful inoculants include the anti-fungal bacterial of the genus Serratia and lactic acid-producing bacteria of the genus Lactobacillus. Particularly useful humectants include sorbitol, propylene glycol, glycerol and hexametaphosphate. Forage e.g. baled hay containing the composition shows improved storage stability at a moisture content in the range 18-30% by weight.

EP 0 475 684 A1

## FIELD OF THE INVENTION

The present invention relates to forage compositions and bacterial compositions for use in the preparation or preservation of silage and hay.

## BACKGROUND OF THE INVENTION

Forage includes cereal grains, whole cereal crops, grasses, legumes, rice, alfalfa, lucerne, sorghum and hay. The forage is usually stored as a dried material, or in the form of a silage produced from these materials by fermentation processes. This fermentation to produce silage is generally conducted in an oxygen-free environment and in the presence of acid-producing bacteria. The dried material or the silage is stored and used as feedstuff as required.

When a forage is to be stored as a dried material, it is necessary that the material be dried to varying degrees prior to storing in order to minimize the colonization of harmful microbes naturally present. For example, hay in the field carries a complex population of fungi, yeasts, actinomycetes and bacteria which could colonize during storage and lead to, in extreme cases, spontaneous combustion. Also, the development of mould or fungus can lead to palatability and health problems for both animals and humans. The rate of microbial development varies depending upon the moisture content, and for baled hay a moisture content of about 17% is a generally preferred upper limit where microbial activity is reduced to a tolerable level. In North America, in order to achieve this low level of moisture content, the usual practise is to allow a period of field wilting or drying prior to baling.

Generally, hay is baled at approximately 17% moisture content and undergoes curing (further drying) to approximately 11% to 13% moisture content. At these lower levels of moisture content the microbial activity is substantially reduced and the hay is safe for long-term storage. It would be an advantage to be able to bale hay at higher moisture content, that is from about 18% to 28%, to benefit from increased protein and dry matter retention. However, hay baled at these higher levels of moisture content undergoes undesirable microbial growth that causes spoilage.

Silage is the fermentation product of crops, such as those listed hereinbefore, brought about by native lactic acid-producing bacteria present on the crop at harvesting. Lactic acid fermentation can be enhanced by the addition of selected lactic acid-producing bacteria. Such bacteria include selected lactic acid-producing strains of the genera Lactobacillus, Streptococcus, Enterococcus, Lactococcus and Pediococcus.

It is important that a state of anaerobiosis be attained in order to obtain good silage, and therefore, the crop is usually stored and permitted to ferment in a sealed container or silo. The state of anaerobiosis, however, can be difficult to achieve rapidly, and is governed by the degree to which air comes into contact with the preserving material in the silo. The exposure of silage to air results in spoiling of the silage, and the degree of spoiling will depend on the aerobic stability of the silage. Also, silage material can spoil after having been removed from the silo prior to animal feeding depending upon this elapsed time interval. In these instances, the spoiling is primarily due to yeast or mould contamination of the ensiled material.

Fungal growth in silage or hay forage can be substantially prevented by the addition of a suitable , anti-fungal bacteria (the term "anti-fungal" includes activity against moulds or yeast). Such bacteria for the preservation of hay and silage has been disclosed in our copending U.S. Patent Application No. 549,863, filed July 9, 1990. The use of such anti-fungal bacteria permits baling of hay, for example, at higher levels of moisture contents up to about 28%. However, as the baled hay undergoes curing and the moisture content drops below about 23% approaching the target of about or below 17%, the viability and activity of the anti-fungal bacteria may decrease. Therefore, in this narrow range of moisture content there is still the risk of undesired microbial growth.

Surprisingly, we have now found that a humectant can be added with the anti-fungal bacteria for treating forage to enhance the viability and the activity of the bacteria. In this way, the protective effect of the anti-fungal bacteria is enhanced. This allows, for example, for better protection of hay during its curing process, or for hay to be baled at higher moisture contents. More surprisingly, we have also found that the humectant is useful in enhancing the activity of lactic-acid producing bacteria in the preparation of silage.

It has been reported that Pseudomonas aeruginosa, a bacterial pathogen of grasshoppers, can be made more resistant to dessication by a coating of a mixture of mucin, sucrose and casein (Angus, T.A. and Luthy, P., "Formulation of Microbial Insecticides", from Microbial Control of Insects and Mites, H.D. Burges, Ed., Acedemic Press (1971) p. 623-638).

Materials having humectant properties, such as sorbitol, have been used in formulation of the bacterial insecticide, Bacillus thuringiensis, hereinafter referred to as B.t., (Sawicka, E.M. and Couch, T.L., "Formulations of Entomopathogens", from Pesticide Formulations and Applications Systems: Third Symposium, ASTM STP 828, T.M. Kaneko and N.B. Akesson, Eds., ASTM, Philadelphia (1983) p. 5-11. The active agent in the use of B.t. is a crystal protein contained in the bacteria, and the viability of the B.t. is not relied upon. The humectant is not added to maintain the viability of the bacteria in this instance.

A fungi, Trichoderma sp. has been reported to be formulated in glycerol and used to control Coriolus versicolor (Pottle, H.W., Shigo, H.L. and Blanchard, R.O., "Biological Control of Wound Hyphomycebes by Trichoderma Larzianum", Plant Diseases Reporter, 61, p. 687-690. The humectant, glycerol, is added to promote conidia germination and germ tube outgrowth. Since one of the major concerns in the preparation and preservation of silage and hay is avoiding fungal growth, and since glycerol, sucrose and sorbitol, mentioned hereinbefore, are known to promote growth of fungi, it is surprising that such humectants have proven effective in the present invention.

It is further surprising that in view of the objective of drying hay, as an example, that a material that retains moisture is useful.

## SUMMARY OF THE INVENTION

Accordingly, the present invention provides a composition comprising: forage; an anti-fungal effective amount of an anti-fungal bacteria and/or a hay- or silage-enhancing effective amount of a hay- or silage-enhancing bacteria to preserve or prepare said forage; and an effective amount of a humectant for said bacteria in order to retard dessication of the bacteria.

The term "hay-enhancing" describes any bacteria which will: i) improve the quality of stored hay by making it more nutritious or digestible to the animal; ii) improve the quality of stored hay by allowing the hay to be stored at higher moisture contents (and thus having less loss of leaf protein); and or iii) improves the quality of stored hay by decreasing the number of molds on the hay. Thus, a hay-enhancing bacteria may have some anti-fungal effect.

The term "silage-enhancing" describes any bacteria which will: i) improve the quality of stored silage by making the silage more nutritious or digestible to the animal; and/or ii) improves the quality of stored silage by creating a faster or high quality fermentation of a silage which is more stable (i.e. which will have fewer fungi and therefore less loss of dry matter).

The term "anti-fungal" describes a bacteria which will decrease the level of fungal growth on the treated forage when compared to untreated forage.

In the case of the preservation of forage according to the invention, the forage is silage, which includes haylage, or is hay. In this instance, it is highly desirable to inhibit the growth of fungi to preserve the silage or hay, and thus the bacteria of the forage composition is an anti-fungal bacteria, preferably of a genus selected from the group consisting of Bacillus and Serratia, in an anti-fungal effective amount. More preferably, the bacteria is an anti-fungal bacteria of a species selected from the group consisting of Serratia rubidaea, Serratia plymuthica, Bacillus subtilis and Bacillus pumilis. Yet more preferably, the anti-fungal bacteria is Bacillus subtilis FB260, a culture of which is deposited at the National Collections Of Industrial And Marine Bacteria (NCIMB), Aberdeen, Scotland, under accession number NCIMB 40286.

In the case of the preparation of a forage according to the invention, the forage is silage, which includes haylage, or is hay and the bacteria is a suitable hay- or silage-enhancing bacteria, such as, for example, a lactic acid-producing bacteria in a silage enhancing effective amount. In silage, for example, the lactic acid-producing bacteria is used to effect fermentation of an appropriate forage to produce said silage. Preferably, the lactic acid-producing bacteria is of a genus selected from the group consisting of Lactobacillus, Pediococcus, Streptococcus and Sporolactobacillus. More preferably, the lactic acid-producing bacteria is of a species selected from the group consisting of Lactobacillus plantarum, Lactobacillus bulgaricus, Lactobacillus acidophilus, Pediococcus acidilactici, Pediococcus pentosaceus, Streptococcus thermophilus, Streptococcus faecium and Sorolactobacillus.

In a preferred embodiment, the present invention also provides a composition comprising a hay- or silage-enhancing effective amount of a hay- or silage-enhancing bacteria in combination with an anti-fungal effective amount of a suitable anti-fungal bacteria, both as hereinbefore defined. While it is expected that two different bacteria would be added to the composition, the present invention also provides a composition wherein one bacteria provides both an anti-fungal and a hay- or silage-enhancing effect. Preferably, the bacteria is Serratia rubidaea FB299, a culture of which is deposited at the National Collections Of Industrial And Marine Bacteria (NCIMB), Aberdeen, Scotland, under accession number NCIMB 40285 which bacteria provides primarily anti-fungal properties, but also provides hay- or silage-enhancing properties.

By the term suitable humectant is meant a material which retards dessication and is compatible with the bacteria.

The humectant is suitably selected from organic alcohols, diols, triols, polyols, complex carbohydrates, inorganic phosphates, molasses, soya flour, gum arabic, locus bean gum, polyvinylacetate or mixtures thereof. Preferably, the humectant is suitably selected from propylene glycol, glycerol, sorbitol, sucrose, polyethylene glycol and sodium hexametaphosphate. Further acceptable humectants include products available under the following trade marks: Viscalex AT33, Salsorb 84 Fines, NuFilm 17, Vapour Guard, Plyac, Kelzan and Gelrite.

In the forage composition of the present invention, preferably, the amount of bacteria is in the range from about $10^{10}$ to about $10^{13}$ colony forming units per tonne of forage, and the amount of humectant is in the range from about 0.001% to about 0.06% by weight of forage.

In addition to having anti-fungal activity, or hay- or silage-enhancing activity, the bacteria(s) for use in the present invention may possess one or more of the following characteristics: the ability to grow at pH values from about 4.0 to about 8.0; the ability to grow at temperatures from about 15°C to about 50°C, preferably from about 25°C-to about 50°C; the ability to use the carbohydrates glucose, melibiose, raffinose, cellobiose, or xylose as a carbon source; weak production of protease; production of cellulases and/or hemicellulases (including xylanases); and osmo-tolerance shown by the ability to grow at sodium chloride concentrations from about 1% to about 15%.

In a further aspect the present invention provides a bacterial composition for use in the preparation or preservation of forage, as in the forage composition as hereinbefore defined, comprising a bacteria, as hereinbefore defined, and a suitable humectant for the bacteria. A suitable humectant for the bacterial composition will be one which does not adversely affect the bacteria during use and/or storage of the composition and which will, in use, retard dessication of the bacteria.

In yet a further aspect the present invention provides a method for the preparation of the forage composition, as hereinbefore defined, comprising treating a suitable forage with an effective amount of a bacterial composition of the present invention as hereinbefore defined.

In a preferred feature of the method of preparing a forage composition according to the invention, hay is treated with an effective amount of a bacterial composition as hereinbefore defined, wherein the bacterial composition comprises a bacteria of a species selected from the group consisting of <u>Serratia</u> <u>rubidaea</u>, <u>Serratia</u> <u>plymuthica</u>, <u>Bacillus</u> <u>pumilis</u> and <u>Bacillus</u> <u>subtilis</u>. Preferably, the bacteria is selected from the group consisting of <u>Serratia rubidaea</u> FB299 and <u>Bacillus</u> <u>subtilis</u> FB260, both as hereinbefore defined.

Not wishing to be bound by the following theory, it is believed that the advantage of better forage preparation and preservation resulting from the use of a humectant together with the bacterial inoculant, may arise as a result of having extended the viability of the bacteria in the forage. By extending the viability, the bacterial inoculant maintains a prolonged activity as the conditions in the forage change. The humectant maintains a desirable microenvironment for the bacteria as the forage undergoes fermentation or drying. In the case of the curing of hay, the humectant may be retaining a sufficient amount of water available to the bacteria to extend its viability, and thus its protective effect as the hay drys. Also, the humectant adjuvant may be assisting in the effect of a chemical agent released by the bacteria. Further, the humectant may be acting to extend the viability of the bacterial inoculant during the harsh conditions that are encountered during spraying the bacterial composition on the forage. During spraying the atomization makes the droplets highly susceptible to drying. The humectant may be exhibiting its beneficial effects in the spraying aspect.

## DETAILED DESCRIPTION OF THE INVENTION

The bacterial composition of the invention is prepared as a solid or as a liquid for applying to a suitable forage in the preparation or preservation of the forage. The bacteria are made available freeze-dried or spray-dried, or a living culture is resuspended in water. The humectant, and optional components such as carriers, nutrients or surfactants, are mixed with the bacteria by conventional blending or mixing procedures. In the case of the bacterial composition being solid, the carrier will be a suitable solid material such as a cereal, which includes ground corn cobs and ground barley and wheat, or clay, chalk, magnesite, limestone or talc. The relative proportion of carrier and bacteria depends upon the particular bacteria used having regard to the activity and viability of the bacteria. In the case of the bacterial composition being a liquid, the carrier will be water. In this instance, a solid bacterial preparation may be mixed with water followed by the addition of a solid or liquid humectant to provide a tank mix.

Generally, the bacterial composition will be supplied to users as a complete formulation in one package; or in more than one package wherein the bacteria and humectant are separate and the package contents are mixed prior to application. Supplying the bacteria and humectant separately for mixing prior to use to provide a tank mix is particularly applicable where the humectant is detrimental to the bacteria in highly concentrated compositions. In some instances, the tank mix can be stored for several days prior to use under the proper set of conditions, e.g. if the storage temperature does not exceed about 40°C.

As a guide for determining application rates in the treatment of forage with the bacterial composition, the amount of bacteria applied is preferably in the range from about $10^4$ colony forming units (cfu) to about $10^7$ cfu per gram of forage, depending upon the nature and condition of the forage. Preferably, the amount of bacteria is in the range from about $10^5$ cfu to about $5 \times 10^6$ cfu per gram of forage.

The bacterial and forage compositions of the invention optionally will contain further materials added for a variety of reasons. Further materials include nutrients and surfactants. Suitable nutrients are those that provide a balance of carbon and nitrogen and micronutrients in an easily assimilated form, and that can be metabolized by the bacteria. Suitable nutrients include glucose, yeast extract, skim milk, whey powder and lactose. The level of nutrient depends upon the easily accessible carbohydrate and nitrogen sources in the forage, and further depends upon the bacteria and its ability to break down sources of nutrients in the forage. Sufficient nutrients are added to stimulate the bacteria, but avoiding an excess that would be metabolized by undesirable indigenous microorganisms, particularly fungi.

A surfactant is optionally added to provide a proper hydrophilic/lipophilic balance to the bacterial composition to promote spreading of the composition evenly over the forage upon application. As a guide, the amount of surfactant is in the range from about 0.001% to about 0.2%, and more preferably 0.005% to 0.1%, weight per volume of composition applied, or volume of tank mix. It will be understood that the surfactant should be compatible with both the bacteria and the forage. Suitable surfactants include the Renex (trade mark), Tween (trade mark) and Span (trade mark) series of surfactants, Silwet (trade mark), Morwet (trade mark) and mono- and diglycerides of $C_8$-$C_{18}$ fatty acids.

In the practise of the method of the present invention, a suitable forage is treated with sufficient bacterial composition to get adequate and even coverage of the forage so that no areas of a substantial size are left without bacteria. It is beneficial to ensure even application of the humectant together with the inoculant over the forage since undesirable microbes in the forage may utilize the humectant as a nutrient and undergo accelerated growth. The bacterial composition will most often be applied to the forage by spraying. As a guide, the volume of the spray is in the range from about one to three U.S. gallons per tonne of forage.

The bacteria composition may be conveniently applied when the forage is entering storage, but may be applied at any time from immediately prior to cutting until the time of storage. For example, the forage can be sprayed with the bacteria composition during cutting of the crop in order to provide anti-fungal or hay- or silage-enhancing during drying, and an additional spraying can be conducted when the forage is stored. Stored, in this specification, is defined as any suitable storage method known to those skilled in the art, and includes baling or ensiling as appropriate.

The moisture content of the crop at the time of spraying and storage will vary depending on the crop. The use of the bacteria composition of the present invention, however, allows the crop to be stored at higher moisture contents than are typically feasible. For example, when hay is stored as part of the forage composition of the present invention, the moisture content may include moisture levels below 17%, as is currently practised, but may range from 17 to 30%, and more preferably from 20 to 27%. Other crops will be stored at different moisture levels, as is known to those skilled in the art.

Examples of commercially important forage for use in the invention are legumes, including alfalfa, lucerne, maize, high-moisture corn grains, corn silage, grain silage, grass silage, vegetable silages, and grass and legume hays.

Further advantages of using the bacterial composition of the invention may include increased dry matter retention in the resulting animal feedstuff, an extended period of heating control in the treated forage or improved preservation of the forage nutrients.

The following examples illustrate the invention, but the scope of the invention is not limited to the embodiments shown therein:

## EXAMPLE 1

The following Example illustrates the use of a bacterial composition comprising an anti-fungal bacterial hay inoculant and preferred humectants. The inoculant was from a freeze dried preparation. The treatments were resuspended in 1/4 Ringers solution and applied by a hand sprayer to rehydrated alfalfa/timothy hay. The hay was at 12% moisture content and was sprayed with 180 ml/kg dry weight of hay. The final moisture content of the hay was between 28-30%. The sprayed hay was then pressed by hand into a plexiglass cube to form mini-bales of 2 kg. size and stored at 37°C and 85% relative humidity. All treatments include the surfactant Renex 36 at 0.05% weight/volume of spray, and the indicated nutrients.

Each of the additive humectants was used at 5% weight/volume of spray. The hay inoculent was used at $1 \times 10^6$ colony forming units/g hay (cfu/g). The resulting fungal growth is listed in Table I. All bales were within 2% moisture content of each other.

## TABLE I

| Hay Inoculant | Humectant | Effect on Fungal Growth |
|---|---|---|
| | | Amount of Fungal Growth on Hay[3] $(cfu/g) \times 10^3$) |
| Serratia rubidaea[1] | | |
| FB299 | -- | 90 |
| FB299 | Sorbitol | 50 |
| FB299 | Propylene glycol | 30 |
| FB299 | Sucrose | 0 |
| FB299 | Glycerol | 0 |
| | | Visual Assessment After 10 Days Storage (Percent Infected by Fungus) |
| Bacillus subtilis[2] | | |
| FB260 | -- | 100% |
| FB260 | Sorbitol | 10% |
| FB260 | Propylene glycol | 50% |
| FB260 | Sucrose | 10% |
| FB260 | Glycerol | 50% |
| FB260 | Sodium hexametaphosphate | 10% |

--------------------------------

[1] Treatments include 0.1% glucose, 0.05% yeast extract and 0.05% Renex 36.

[2] Treatments include 0.1% skim milk powder and 0.05% Renex 36.

[3] Fungal Growth was assessed by standard plate count techniques after 7 days incubation.

### EXAMPLE 2

This example illustrates the use of a bacterial composition comprising a hay inoculant with two levels of the humectant, propylene glycol (PG).

This trial was performed on second cut alfalfa/timothy hay with an at-baling moisture of 23-25%. The bacteria was added at a rate of $10^6$ cfu/g of hay. Hay was baled in large round bales of approximately 300 kg and stored outdoors, uncovered at ambient temperature until internal bale temperatures had stabilized, and moisture content was below 17%. Five bales were made per treatment. The results are reported as an average value (see Table 2). All bales were within 2% moisture content of each other.

## TABLE 2

| Treatment | Viable Fungi | Visual Moulds | Dustiness | Odour | FV |
|---|---|---|---|---|---|
| Control (hay only) | $3.0 \times 10^6$ | 3.5 | 2.8 | 3.9 | 3.0 |
| Serratia rubidaea FB299 with 2% Propylene glycol | $1.0 \times 10^4$ | 2.4 | 1.8 | 2.7 | 2.5 |
| Serratia rubidaea FB299 with 1% Propylene glycol | $1.0 \times 10^4$ | 1.5 | 1.5 | 1.4 | 1.5 |

-------------------------------

Treatments 2 and 3 include 0.01% Renex 36, 0.1% glucose and 0.05% yeast extract.

Viable fungi count was done using standard plate count techniques on triplicate cores taken from the bales at appropriate intervals. Counts shown are from day 10 cores.

Visual assessment was done after the bales were opened on day 33.

Visual moulds were scored on a scale of 1 to 7 where 1 is no moulds and 7 is a completely mouldy bale. Dustiness was rated from 1 to 5 with 1 being good and 5 being poor. Odour was rated from 1 to 5 with 1 being good and 5 being poor. Feed Quality (FV) was rated from 1 to 5 with 1 being excellent and 5 being very poor.

## EXAMPLE 3

This example illustrates the preparation of silage using a bacterial composition comprising an anti-fungal bacteria and a humectant.

The trial was performed on whole shelled high moisture corn grain at 26-28% moisture content ensiled in PVC silos, 2 kg size. The anti-fungal bacteria was applied at $1.0 \times 10^6$ cfu/g and hand sprayed on the corn. The bacterial composition was sprayed at 200 ml/kg of corn. The results are listed in Table 3.

## TABLE 3

| Treatment | pH | Visual Moulds After 4 Days Aerobic Exposure at 20°C – 22°C |
|---|---|---|
| Control | 4.39 | 3.0 |
| Serratia rubidaea FB299 | 4.23 | 1.5 |
| Serratia rubidaea FB299 with 1% Propylene glycol | 4.12 | 0 |

An improved lowering of pH after 4 days is seen resulting from the use of the humectant, in addition to an improved lowering of fungi.

## Claims

The embodiments of the invention in which an exclusive property or privilege is claimed are defined as follows.

1. A composition comprising:
    forage;
    an anti-fungal effective amount of anti-fungal bacterial and/or a hay- or silage-enhancing effective amount of hay-or silage-enhancing bacteria to preserve or prepare said forage; and
    an effective amount of a humectant for said bacteria in order to retard desiccation thereof.

2. A forage composition as claimed in Claim 1:
    said anti-fungal bacterial being of a genus selected from the group consisting of Bacillus and Serratia; and/or said hay- or silage enhancing bacteria being lactic acid-producing bacteria of a genus selected from the group consisting of Lactobacillus, Pediococcus, Streptococcus, and Sporolactobacillus.

3. A forage composition as claimed in Claim 1:
    said anti-fungal bacterial being Bacillus subtilis FB260; and/or
    said lactic acid-producing bacteria being of a species selected from the group consisting of Lactobacillus plantarum, Lactobacillus bulgaricus, Lactobacillus, acidophilus, Pediococcus acidilactici, Pediococcus pentosaceus, Streptococcus thermophilus, Streptococcus faecium and Sporolactobacillus; and/or
    said bacteria being Serratia rubitaea FB299 and providing both an anti-fungal and a hay- or silage-enhancing effect.

4. A forage composition as claimed in any one of the preceding Claims, wherein said humectant is selected from an organic alcohol, a diol, a triol, a polyol, a complex carbohydrate, an inorganic phosphate, molasses, soya flour or polyvinylacetate or mixture thereof.

5. A forage composition as claimed in any one of the preceding Claims, wherein the amount of said bacteria is in the range from about $10^{10}$ to about $10^{13}$ colony forming units per tonneof forage, and the amount of humectant is in the range from about 0.001% to about 0.06% by weight of forage.

6. A forage composition as claimed in any one of the preceding Claims, further comprising a surfactant.

7. A forage composition as claimed in any one of the preceding Claims, wherein said forage is hay having a moisture content, when stored, of 20 to 27% by weight

8. A bacterial composition for use in the preparing or preserving a forage composition as defined in any one of the preceding Claims, comprising bacteria and an effective amount of a humectant therefor.

9. A method for preparing or preserving forage comprising treating it with an effective amount of a bacterial composition as defined in Claim 8.

10. A method of producing bales of hay characterised by the steps of cutting grass, adjusting it if necessary to a moisture content in the range 18 to 30% by weight, treating it before, during or after said cutting and/or adjustment with an effective amount of bacterial composition as defined in Claim 8 and baling it without adjustment of moisture content outside said range.

**European Patent Office**

## EUROPEAN SEARCH REPORT

Application Number

EP 91 30 8140

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | WO-A-9 111 509 (IMPERIAL CHEMICAL INDUSTRIES PLC ) <br> * page 1, line 9 - line 14; claims 1,4-7 * <br> * page 8, line 33 - page 10, line 11; examples 2,3,5 * | 1-4,8-10 | A23K3/03 <br> C12N1/04 |
| P,X | EP-A-0 408 220 (ICI CANADA INC) <br> * page 5, line 17 - line 31; claims 1-13 * | 1-5,8-10 | |
| X | US-A-4 820 531 (NANCY J. TOMES) <br> * column 4, line 49 - line 64; claims 1-17 * | 1-5,7-10 | |
| X | GB-A-2 205 476 (UNILEVER PLC) <br> * page 1, line 3 - line 10 * <br> * page 9, line 21 - line 25; claims 1,5,7,8,12,13; examples 1,3,5,6 * | 1-4,8,9 | |
| X | US-A-4 226 940 (ARNOLD B. STORRS) <br> * column 4, line 3 - line 15; examples 3,5 * | 1-4,8,9 | |
| X | CH-A-460 503 (DR. THEODOR BECK ET AL.) <br> * column 3, line 36 - line 38 * <br> * column 4, line 54 - line 67; claims * | 1-4,8,9 | TECHNICAL FIELDS SEARCHED (Int. Cl.5) |
| A | WO-A-8 401 694 (SUOMEN SOKERI OY) <br><br> * claims 1,2,6,14,15,17,22,24 * | 1,4,6,8,9 | A23K <br> C12N |
| A | EP-A-0 196 593 (MILES LABORATORIES, INC.) <br> * page 9, line 7 - line 10 * <br> * page 10, line 12 - line 28; claims 1,3,6,9,10; example 3 * | 1-4,8,9 | |
| A | GB-A-2 016 043 (DANOCHEMO) <br> * claims 1-3,13 * | 8,9 | |

The present search report has been drawn up for all claims

| Place of search | Date of completion of the search | Examiner |
|---|---|---|
| THE HAGUE | 11 NOVEMBER 1991 | DEKEIREL M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)